# EUROPÄISCHE PATENTSCHRIFT

(11) **EP 1 648 764 B1**
(45) Veröffentlichungstag und Bekanntmachung des Hinweises auf die Patenterteilung: **05.10.2011**
(21) Anmeldenummer: 04763607.1
(22) Anmeldetag: 29.07.2004
(51) Int. Cl.: B64C 1/14, E05F 7/00, E06B 3/46

(54) **SCHIEBETÜR MIT EINEM RAHMEN UND EINER FÜHRUNG**
SLIDING DOOR COMPRISING A FRAME AND A GUIDING MECHANISM
PORTE COULISSANTE COMPRENANT UN CADRE ET UNE GLISSIERE

(30) Priorität: 29.07.2003 DE 10334871
(43) Veröffentlichungstag der Anmeldung: 26.04.2006
(73) Patentinhaber: Hoedtke GmbH & Co. KG, 25421 Pinneberg (DE)
(72) Erfinder: KROHN, Dieter, 24558 Wakendorf (DE); HOEDTKE, Günter, F., 25421 Pinneberg (DE)
(74) Vertreter: Borchert, Uwe Rudolf
(86) Internationale Anmeldenummer: PCT/EP2004/008506
(87) Internationale Veröffentlichungsnummer: WO 2005/012081

(56) Entgegenhaltungen:
- DE-A- 19 706 338
- US-A- 4 667 441
- US-A1- 2004 148 865

## Beschreibung

Die Erfindung betrifft eine Schiebetür mit einem Rahmen und einer Führung gemäß der im Oberbegriff des Anspruches 1 angegebenen Art.

Schiebetüren sind in verschiedenen Ausführungen für unterschiedlichste Einsatzzwecke bekannt.'Die bekannten Schiebetüren weisen eine Führung für ein Türblatt auf, das zwischen einer Offenstellung und einer Schließstellung in der Führung verschiebbar ist. Des Weiteren ist eine Verriegelungsvorrichtung vorgesehen, die das Türblatt in der Schließstellung fest verriegelt. In der Schließstellung des Türblattes ist ein Rahmen vorgesehen, der im Randbereich der ersten und zweiten Seite des Türblattes dieses zumindest bereichsweise bedeckt.

Der Rahmen besteht überwiegend aus einem oberen und einem unteren Querholm und zwei seitlichen Längsrahmenteilen. Durch das erste Längsrahmenteil wird das Türblatt beim Verschieben aus der Offenstellung in die Schließstellung hindurchverfahren. Bei dem zweiten Längsrahmenteil liegt die Vorderkante des Türblattes in der Schließstellung an dem Längsrahmenteil an. Problematisch bei den bekannten Schiebetüren ist, dass diese nur geringen Belastungen ausgesetzt werden dürfen, beispielsweise aufgrund von Gasdrücken, da beispielsweise bei einer Ausbildung aus Blech diese sich bei hohen Differenzdrücken zwischen der Vorderseite und der Rückseite der Schiebetür in der verriegelten Schließöffnung sofort verformen würden. Zwar könnte der Rahmen und das Türblatt aus biegesteifen Material ausgebildet werden, jedoch erhöht dies zum einen das Gewicht erheblich und zum anderen bildet das erste Längsrahmenteil weiterhin eine Schwachstelle, da zwischen dem ersten. Längsrahmenteil immer das Türblatt beim Bewegen aus der Offenstellung in die Schließstellung und umgekehrt hindurchgeführt werden muss.

Aus der US 5 673 874 A als auch aus der US 5 181 677 ist jeweils eine gattungsgemäße Schiebetür bekannt. Die Versteifungsmittel werden dabei durch die Führung selbst gebildet, die als ein ineinander greifendes Profil ausgebildet ist. Nachteilig ist dabei, dass zum Verfahren der Schiebetür ein hoher Kraftaufwand notwendig ist, da aufgrund des über den gesamten Verschiebeweg ineinander greifenden Profils eine hohe Reibung entsteht.

Aus der WO 90/13 725 A1 ist eine Schiebetür bekannt, die einen Rahmen aufweist. Die Vorderkante des Türblattes der Schiebtür liegt dabei in der Schließstellung an einem zweiten Längsrahmenteil an. Durch ein erstes Längsrahmenteil wird die Schiebetür hindurch bewegt.

De 19706338 A1 zeigt eine Schiebetür gemäß dem Oberbegriff des Anspruchs 1. Der Erfindung liegt die Aufgabe zugrunde, eine Schiebetür mit einem Rahmen und einer Führung gemäß der im Oberbegriff des Anspruches 1 angegebenen Art derart weiterzubilden, dass eine biegefeste Ausbildung auch in Leichtbauweise ermöglicht wird.

Diese Aufgabe wird durch die kennzeichnenden Merkmale des Anspruches 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch Versteifungselemente, die am Türblatt und/oder am Rahmen angebracht sind sowie die im wesentlichen nur in der Schließstellung ineinander greifen oder so aneinander anliegen, dass eine Kraft quer zur Verschieberichtung erzeugt wird, ein Aussteifen des Rahmens auf einfache Weise ermöglicht wird.

Nach der Erfindung weist daher das Türblatt Eingriffsmittel und der Rahmen Aufnahmemittel auf, die im wesentlichen nur in der Schließstellung ineinander greifen und dabei eine Kraft quer zur Verschieberichtung erzeugen, die den zugeordneten Bereich des Rahmens aussteift.

Vorzugsweise weisen dabei die Eingriffsmittel zumindest eine schräge Fläche und die Aufnahmemittel eine zugeordnete schräge Fläche auf, wobei über die schrägen Flächen und eine Kraft auf das Türblatt quer zur Verschieberichtung die Querkraft als Reaktionskraft zur Aussteifung des Rahmens erzeugt wird.

Durch die schrägen Flächen wird des Weiteren erreicht, dass die Anlageflächen vergrößert werden und somit die Flächenbelastung verringert wird. Dadurch können große Kräfte auch in einer Leichtbaukonstruktion der Schiebetür übertragen werden.

Insbesondere ist der Bedarf an dichtenden Schiebetüren in der Flugzeugindustrie gewachsen. Hier besteht aber das Problem, das derartige Schiebetüren gewissen Sicherheitsanforderungen entsprechen müssen. Es wurde daher vom selben Anmelder eine Verriegelungsvorrichtung entwickelt, die das Türblatt gegen einen Anschlag, normalerweise eine Dichtung, drückt.'Daher erzeugt gemäß einer Ausführungsform der Erfindung die Verriegelungsvorrichtung die Kraft auf das Türblatt.

Vorzugsweise ist dabei die Kraft auf das Türblatt nur im Verriegelungszustand wirksam, in dem sich die Verriegelungsvorrichtung auf der einen Seite des Rahmens abstützt und das Türblatt gegen Anschlagmittel auf der anderen Seite des Rahmens drückt.

Vor allem werden durch die Verriegelungsvorrichtung im Verriegelungszustand die beiden Seiten des Rahmens durch die Kraft auseinander gedrückt. Dabei halten die Eingriffsmittel des Türblatts und die Aufnahmemittel des Rahmens den Rahmen zusammen, wodurch die Querkraft als Reaktionskraft auf die Verriegelung wirksam ist.

Die Eingriffsmittel sind vorzugsweise an der in Bezug auf die Verschieberichtung des Türblattes aus der Offenstellung in die Schließstellung an der Hinterkante des Türblattes angeordnet. Schließlich erfordert insbesondere das erste Längsrahmenteil des Rahmens, durch welches das Türblatt hindurch geschoben wird, eine Aussteifung.

Dabei sind die Aufnahmemittel des Rahmens jeweils auf beiden einander gegenüber liegenden Innenseiten des Rahmens nebeneinander angeordnet. Die den beiden Aufnahmemittel des Rahmens zugeordneten Eingriffsmittel des Türblattes sind als eine Klaue ausgebildet.

Um auch hohe Lastwechsel aufnehmen zu können, haben die Versteifungsmittel des Rahmens und des Türblattes jeweils zwei Auflager zum Übertragen der Kräfte in der Schließstellung zwischen dem Türblatt und dem Rahmen - erstes Auflager - und um die Führung des Türblattes zu unterstützen - zweites Auflager -. Hierbei wird jeweils das erste Auflager durch die schrägen, einander zugeordneten Flächen der Eingriffs- und Aufnahmemittel gebildet. Des Weiteren wird jeweils das zweite Auflager durch zumindest eine an der Innenseite des Rahmens aufliegende Rollen gebildet. Dabei können mehrere Rollen um eine Achse herum angeordnet ein Auflager bilden.

Gemäß einer Ausführungsform ist die Klaue und die Hinterkante des Türblattes über einen Bügel miteinander verbunden, wobei der Bügel relativ zur Klaue in einer Richtung quer zur Verschieberichtung und senkrecht zur Fläche des Türblattes bewegbar gelagert ist. Die bewegbare Lagerung des Bügels relativ zur Klaue ist notwendig, um beispielsweise beim Verriegeln des Türblattes in der Schließstellung eine Schließbewegung des Türblattes senkrecht zur Verschieberichtung ausgleichen zu können.

Die Rolle ist an der dem Türblatt entfernt gelegenen Seite der Klaue in dieser drehbar gelagert.

Die am Rahmen angeordneten Versteifungsmittel weisen den Klauen zugeordnete Vertiefungen auf, in welche die Klauen in der Schließstellung des Türblattes eingreift.

Die Aufnahmemittel des Rahmens und die Eingriffsmittel des Türblattes sind im Hinblick auf die Ebene der Verschieberichtung des Türblattes symmetrisch ausgebildet.

Vorzugsweise umfasst der Rahmen ein erstes und ein zweites Längsrahmenteil, wobei bei der Verschiebebewegung des Türblattes aus der Offenstellung in die Schließstellung und umgekehrt das Türblatt durch das erste Längsrahmenteil hindurch geschoben wird und die Vorderkante des Türblattes in der Schließstellung des Türblattes an dem zweiten Längsrahmenteil angeordnet ist.

Die Aufnahmemittel des Rahmens sind in dem ersten Längsrahmenteil und die Eingriffsmittel des Türblattes nur an der Hinterkante des Türblattes angeordnet, sodass nur an dem ersten Längsrahmenteil die Versteifungsmittel wirksam sind. Die übrigen Teile des Rahmens, nämlich der obere Querbalken und der untere Querbalken und das zweite Längsrahmenteil werden durch andere Versteifungsmittel ausgesteift. Beispielsweise sind im oberen und untern Querbalken die Führungen für das Türblatt angeordnet und in dem zweiten Längsrahmenteil ein Seitenholm zum Aussteifen vorgesehen. Vorzugsweise ist der Rahmen in Leichtbauweise, beispielsweise aus Blech, hergestellt.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, der Zusammenfassung und den Zeichnungen werden die in der hinten angeführten Liste der Bezugszeichen verwendeten Begriffe und zugeordneten Bezugszeichen verwendet. Die Zeichnung zeigen in
- Fig. 1: eine perspektivische schematische Darstellung einer Schiebetür mit Führungen, Seitenholmen und Rahmen;
- Fig. 2: eine Längsschnittdarstellung mit Blick auf ein zweites Rahmenteil des Rahmens, in dem eine Verriegelungsvorrichtung für ein Türblatt der Schiebetür angeordnet ist;
- Fig. 3: eine Querschnittdarstellung eines im Rahmen angeordneten Sicherheitsfühlers in der Schließstellung des-Türblattes der Schiebetür;
- Fig. 4: eine Querschnittsdarstellung durch ein Längsrahmenteil (Holm) des Rahmens in der Schließstellung des Türblattes, der einen Fühler zeigt;
- Fig. 5: eine Längsschnittdarstellung durch den Rahmen mit einer Handhabe als Teil der Verriegelungsvorrichtung und mit einem Türblatt in der Schließstellung;
- Fig. 6: einen Querschnittsdarstellung durch ein Längsrahmenteil (Holm) des Rahmens in den das der Handhabe entfernt gelegene Ende des Türblattes in der Schließstellung eingreift;
- Fig. 7: einen Längsschnitt durch einen Bewegungsumsetzer als Teil der Verriegelungsvorrichtung in der Freistellung des Verriegelungselementes;
- Fig. 8: einen Längsschnitt durch einen Bewegungsumsetzer als Teil der Verriegelungsvorrichtung in der Haltestellung des Verriegelungselementes;
- Fig. 9: einen Längsschnitt durch ein Längsrahmenteil (Holm) des Rahmens in der Schließstellung des Türblattes mit einer Sperrvorrichtung; und
- Fig. 10: eine Draufsicht einer schematischen Darstellung mit Blick auf das zweite Rahmenteil im Bereich der Handhabe, indem sowohl ein mit der Handhabe verbundenes Ritzel als auch der Bewegungsumsetzer der Verriegelungsvorrichtung mit Verriegelungselement dargestellt sind.

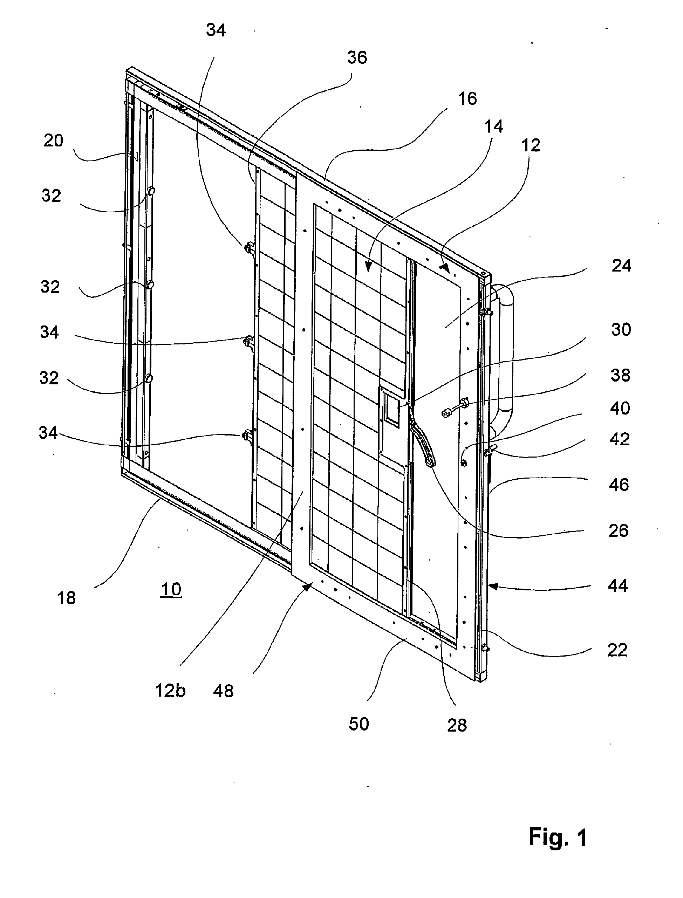

In Fig. 1 ist in einer perspektivischen Darstellung eine Schiebetür 10 nach der Erfindung dargestellt. Die Schiebetür 10 umfasst einen Rahmen 12, ein Türblatt 14, eine obere Führung 16 und eine untere Führung 18.

Die untere und obere Führung 16 und 18 begrenzen den Rahmen 12 nach oben bzw. unten. Zudem sind seitliche Versteifungsholme 20 und 22 vorgesehen, die am rechten freien Ende der oberen und unteren Führung 16 und 18 diese miteinander verbinden - seitlicher Versteifungsholm 22 - sowie am linken seitlichen Ende der oberen und unteren Führung 16 und 18 diese miteinander verbinden - seitlicher Versteigungsholm 20. Zwischen den beiden Versteifungsholmen 20 und 22 erstreckt sich die obere und untere Führung 16 und 18. Zwischen der oberen und unteren Führung 16 und 18 erstreckt sich das Türblatt 14.

Wenn sich das Türblatt 14 gemäß Fig. 1 in seiner ganz linken Position befindet, begrenzt der Rahmen 12 eine Durchgangsöffnung 24. Die Schiebetür 10 befindet sich dann in ihrer Öffnungsstellung.

Befindet sich das Türblatt 14 in seiner in Bezug auf Fig. 1 ganz äußerst rechten Position, ist das Türblatt also vollständig innerhalb des Rahmens 12 angeordnet, befindet sich die Schiebetür 10 in ihrer Schließstellung.

Das Türblatt 14 ist zwischen seiner Offenstellung und seiner Schließstellung in der oberen Führung 16 und der unteren Führung 18 verschiebbar gelagert.

Das Türblatt 14 weist in die obere Führung 16 und die untere Führung 18 eingreifende, hier nicht dargestellte Führungsrollen auf, über die eine leichte Verschiebbarkeit des Türblattes 14 ermöglicht wird. Zudem ist die Schiebetür 10 in Leichtbauweise hergestellt. Das Türblatt 14 weist als Füllung schalldämmendes Füllmaterial - Kunststoffwabe - auf, das mit schalldämmenden Kacheln bedeckt auch vor mechanischer Beschädigung geschützt ist.

An der zu der Durchgangsöffnung 24 zugewandten Seite ist eine in das Türblatt 14 ein- und ausklappbare Türklinke 26 an ihrem oberen Ende schwenkbar gelagert. In ihrer eingeschwenkten- Position fluchtet die Türklinke 26 mit der der Durchgangsöffnung 24 zugewandten Vorderkante 28 des Türblattes 14. Hierdurch kann auf einfache Weise über die Türklinke 26 das Türblatt 14 aus seiner Offenstellung in Richtung Schließstellung von einer Bedienperson bewegt werden.

Da vor Erreichen der Schließstellung die Türklinke 26 eingeklappt werden muss, um ein Einklemmen der Hand einer Bedienperson zu verhindern, ist für das weitere Bewegen des Türblattes 14 auf jeder Seite des Türblattes 14 eine Vertiefung benachbart zur Türklinke 26 in das Türblatt 14 eingebracht, die als Griff 30 dient.

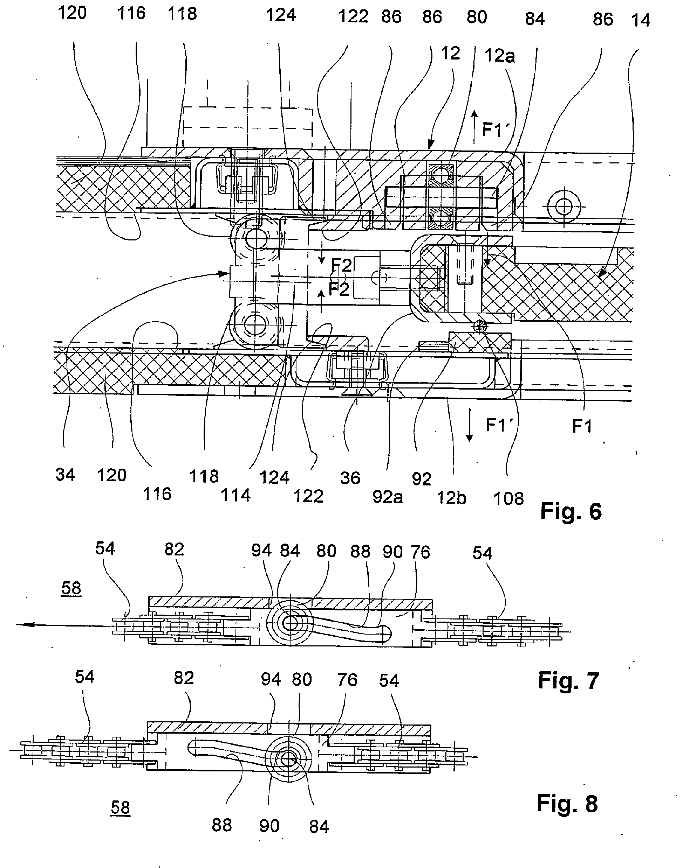

Der seitliche Versteifungsholm 20 weist auf seiner dem Türblatt 14 zugewandten Seite Gummipuffer 32 für das Türblatt 14 auf. Diesen Gummipuffern 32 sind Versteifungsklauen 34 zugeordnet, die an der dem seitlichen Versteifungsholm 20 zugeordneten Hinterkante 36 am Türblatt 14 befestigt sind. Die Funktion der Versteifungsklauen 34 wird weiter unten im Zusammenhang mit Figur 6 noch näher erläutert.

Die obere und untere Führung 16 und 18 sind zusammen mit den Versteifungsholmen 20 und 22 und dem Rahmen 12 in eine bestehende Wandung, beispielsweise eines Flugzeugs integriert. Auf die obere und untere Führung 16 und 18 sind neben dem Rahmen 12 bis zum seitlichen Versteifungsholm 20 Wandungsteile dicht abschließend aufgebracht, sodass der Verfahrbereich des Türblattes 14 neben dem Rahmen 12 nicht blockiert werden kann und dieser Bereich fest verschlossen ist.

In Fig. 1 ist des Weiteren in dem Bereich des Rahmens 12, der den seitlichen Versteifungsholm 22 bedeckt, ein auf der Vorderseite 48 der Schiebetür 10 wirksamer Sicherheitsfühler 38 und auf der Vorderseite und Rückseite der Schiebetür 10 ein Eingriff 40 für eine Handhabe 42 vorgesehen. Die Handhabe 42 kann auf jeder Seite des Rahmens 12 als Teil einer Verriegelungsvorrichtung für das Türblatt 14 in den Eingriff 40 eingreifen. Hierfür ist die Handhabe 42 so ausgebildet, dass diese für jede Seite einen eigenen Formschluss für den Eingriff 40 aufweist.

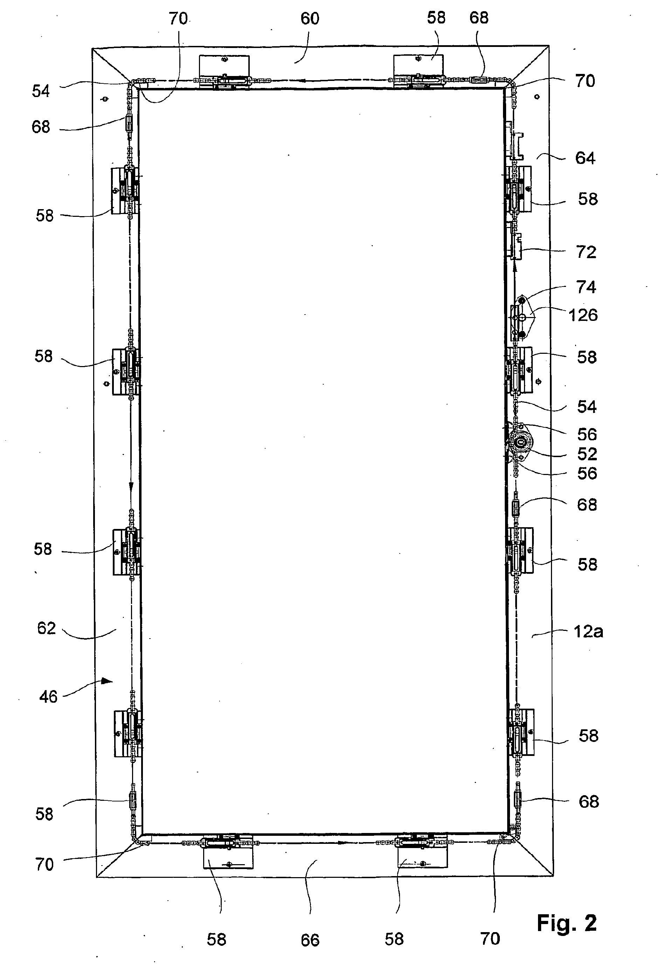

In den Figuren 2, 5, 7, 8 und 10 ist die Verriegelungsvorrichtung dargestellt, die auf der in Bezug auf Fig. 1 gelegenen Hinterseite 44 der Schiebetür 10 in einem hinteren Rahmenteil 46 des Rahmens 12 angeordnet ist. Die Vorderseite 48 weist ein vorderes Rahmenteil 50 des Rahmens 12 auf.

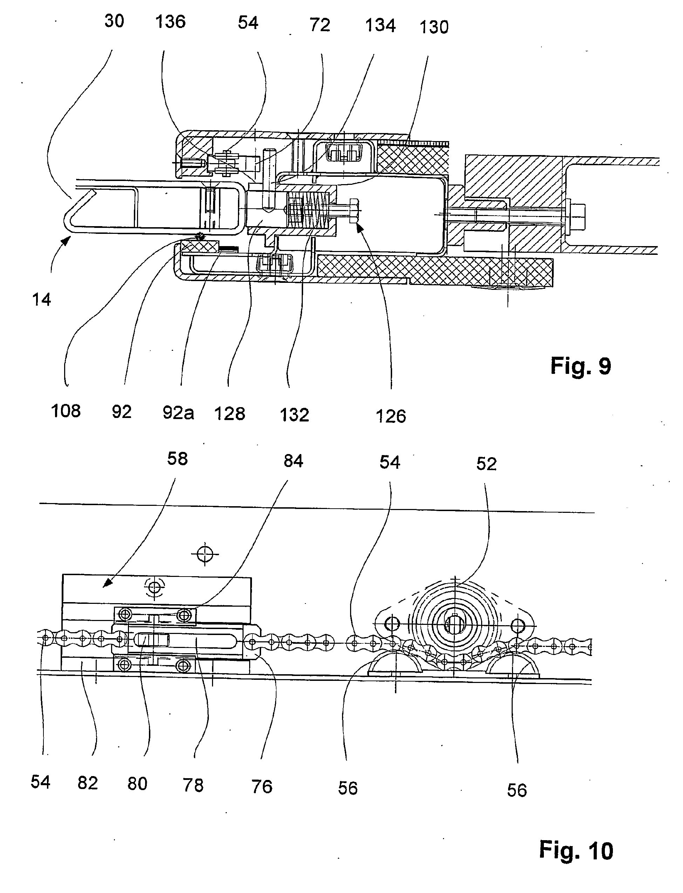

Die Handhabe 42 greift in den Eingriff 40 des Rahmenteils 46 ein. Hierdurch wird die Handhabe 42 mit einem Ritzel 52 gekoppelt, das drehbar an der Innenseite des Rahmenteils 46 gelagert ist. Das Ritzel 52 greift in eine Gliederkette 54 als Kraftübertragungsmittel ein, wodurch die Bewegung der Handhabe 42 über das Ritzel 52 auf die Kette 54 übertragen werden kann. Damit der Eingriffsbereich des Ritzels 52 in die Kette 54 möglichst groß ist, sind dem Ritzel auf jeder Seite zwei Führungsflächen 56 zugeordnet, die die Kette 54 von der dem Ritzel 52 entfernt gelegenen Seite der Kette 54 gegen das Ritzel 52 drücken und die Kette 54 im Betrieb führen, siehe Figur 10.

Die Kette 54 verbindet mehrere über den Umfang des Rahmenteils 46 verteilt angeordnete Bewegungsumsetzer 58 miteinander, die jeweils einander entsprechend aufgebaut sind. Hierbei sind an dem oberen Querholm 60 des Rahmenteils 46 zwei Bewegungsumsetzer 58 angeordnet, an den seitlichen Holmen 62 und 64 des Rahmenteils 46 jeweils vier Bewegungsumsetzer 58 und an dem unteren Querholm 66 des Rahmenteils 46 ebenfalls zwei Bewegungsumsetzer befestigt, siehe Figur 2. Zudem sind mehrere Kettenspannmittel 68 eingebracht, die zum einen die Montage vereinfachen und eine Einstellbarkeit einer gleichmäßigen und gleichförmigen Bewegung zwischen zwei Endpositionen der Verriegelungsvorrichtung gewährleisten sollen.

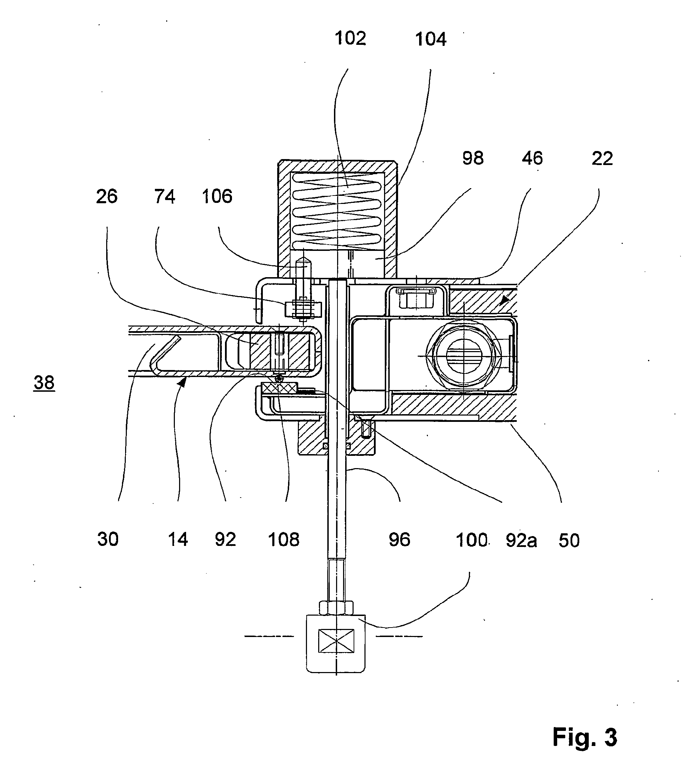

In den Ecken des Rahmenteils 46 wird die Kette 54 über Gleitführungen 70 umgelenkt. Zudem sind zwei Sperrmittel 72 und 74 in die Kette 54 zwischengeschaltet, auf die im Zusammenhang mit den Fig. 3 und 9 weiter unten noch näher eingegangen wird.

Der Bewegungsumsetzer 58 weist einen Schlitten 76 auf, an den die Kette 54 beidseitig angreift. In dem Schlitten ist eine Ausnehmung 78 vorgesehen, in der eine Rolle 80 angeordnet ist. Der Schlitten 76 ist in einem mit dem Rahmenteil 46 fest verbundenen Gehäuse 82 verschiebbar gelagert. Die Rolle 80 weist eine Achse 84 auf, die in eine Führungskulisse 88 sowie in das Gehäuse 82 von beiden Seiten der Rolle 80 ausgehend eingreift, siehe Fig. 6 und 10.

Die Ausnehmung 78 ist in Verschieberichtung des Schlittens 76 zumindest so groß wie die notwendige Bewegung zum Verriegeln des Türblattes 14 aus seiner Offenstellung in seine Schließstellung. Die Rolle 80 ist somit über die Achse 84 in Richtung einer Ebene parallel zum Rahmenteil 46 fixiert. Die Achse 84 ist jedoch in einer senkrecht zur Ebene des Rahmenteils 46 sich erstreckenden Nut 86 im Gehäuse 82 auf jeder Seite der Rolle 80 und der Führungskulisse 88 gelagert, sodass die Rolle 80 senkrecht zur Verschieberichtung mit Bewegen des Schlittens 76 in eine Verschieberichtung bewegbar ist, siehe Fig. 6.

Wie oben bereits ausgeführt, wird über die Handhabe 42 das Türblatt 14 in seiner Schließstellung verriegelt. Hierbei wird jeweils die als Verriegelungselement dienende Rolle 80 des Bewegungsumsetzer 58 aus einer das Türblatt 14 freigebenden Freistellung in eine das Türblatt 14 in einem Reibschluss mit einer Dichtung 92 haltenden Haltestellung verfahren. Die Rolle 80 drückt dafür das Türblatt 14 gegen ein Elastomer, das in das Rahmenteil 50 eingebracht ist und als Dichtung 92 dient.

Durch den Druck von der Rolle 80 des Bewegungsumsetzers 58 auf das Türblatt 14 wird somit eine Kraft F₁ auf das Türblatt 14 aufgebracht. Der Bewegungsumsetzer 58 stützt sich dabei an der einen Seite 12a des Rahmens 12 ab und das Türblatt 14 drückt mit der Kraft F₁ gegen die Dichtung 92, die an der anderen Seite 12b des Rahmens 12 in das Rahmenteil 50 eingerbacht ist. An den Seiten 12a und 12b des Rahmens 12 liegt daher eine in Bezug auf die Kraft F₁ entgegengesetzt wirkende Kraft F₁'an. Die Kraft Eindrückt die Seiten 12a und 12b des Rahmens 12 auseinander. Um insbesondere den Rahmen 12 aufgrund dieser im Verriegelungszustand wirksamen Kräfte F₁' auszusteifen, sind Aussteifmittel in Form von Aufnahmemittel im Rahmen 12 und Eingriffsmittel am Türblatt 14 vorgesehen, die eine Querkraft F₂ erzeugen auf die jedoch weiter unten noch eingegangen wird.

Die Drehbewegung der Handhabe 42 geht von einer Endposition in die andere Endposition über einen Winkel von 90°. Hierbei wird der Schlitten 76 des Bewegungsumsetzer 58 in die eine oder andere Verschieberichtung verfahren. Über die Führungskulisse 88 des Schlittens 76, die die Achse 84 der Rolle 80 auf beiden Seiten der Rolle 80 durchgreift, wird die Rolle 80 dann von einer Endposition in die andere Endposition verschoben. Die beiden Endpositionen sind in den Fig. 7 und 8 im einzelnen dargestellt.

In Fig. 7 und 8 ist das Gehäuse 82 im Schnitt dargestellt und zeigt den Schlitten 76 sowie die Kette 54 von der Seite. Hier ist die Ausbildung der Führungskulisse 88 erkennbar.

In Fig. 7 ist die Position dargestellte in der die Rolle 80 sich in ihrer das Türblatt 14 freigebenden Freistellung befindet.

In Fig. 8 befindet sich die Rolle 80 in einer das Türblatt 14 gegen die Dichtung 92 des Rahmenteils 50 pressenden Haltestellung. Bevor die Rolle 80 die Haltestellung erreicht, wird sie noch über einen Totpunkt 90 geführt, damit die Bedienperson das Erreichen der Haltestellung spüren kann. Hierfür ist die Führungskulisse 88 in Bezug auf Fig. 8 kurz vor der Haltestellung weiter nach unten geführt, als sie in der Haltestellung dann letzten Endes ausgebildet ist.

Der Schlitten 76 ist im Hinblick auf seine Verschieberichtung spiegelsymmetrisch ausgebildet. Ebenso ist die Rolle 80 mit der Achse 84 und der im Gehäuse 82 vorgesehenen Nut 86 im Hinblick auf die Verschieberichtung spiegelsymmetrisch ausgebildet.

Mehrere Rollen 80 sind dabei um eine Achse herum angeordnet und bilden ein Auflager sowie ein wartungsfreies Kugellager.

Das Gehäuse 82 weist eine der Rolle 80 zugeordnete Aussparung 94 auf, damit die Rolle 80 ungehindert in ihre Freistellung verfahren werden kann, siehe Fig. 7. In dieser Freistellung ist die Rolle 80 vollständig innerhalb des Bewegungsumsetzers 58, also innerhalb des Schlittens 76 und des Gehäuses 82 angeordnet.

Das Gehäuse 82 des Bewegungsumsetzers 58 ist jeweils mit dem Rahmenteil 46 verschraubt.

In Fig. 3 ist ein Querschnitt in Höhe des Sicherheitsfühlers 38 durch den Rahmen 12 und den seitlichen Versteifungsholm 22 bei geschlossenem Türblatt dargestellt. Der Sicherheitsfühler 38 umfasst einen über ein Gewinde in seiner Länge verstellbaren Stab 96, der auf der einen Seite mit einem Kolben 98 und auf der anderen Seite mit einem Fühlerkopf 100 verbunden ist. Der Kolben 98 weist einen Sperrstift 106 auf, der in das Sperrmittel 74 in der in Fig. 3 dargestellten Position eingreift und die aus Kette 54, Ritzel 52 und Bewegungsumsetzer 58 bestehende Betätigungsvorrichtung der Verriegelungsvorrichtung blockiert.

Der Kolben 98 ist in dem Zylinder 104 gegen die Kraft der Feder 102 aus der in Fig. 3 dargestellten Sperrposition in eine das Sperrmittel 74 freigebenden Position verfahrbar. Hierbei rückt der Sperrstift 106 vollkommen aus dem Sperrmittel 74 heraus und gibt die Betätigungsvorrichtung frei. Der Sicherheitsfühler 38 wird durch ein gegen den Fühlerkopf 100 wirkendes Objekt, beispielsweise ein Schlafcontainer im Laderaum eines Flugzeugs, aus der Sperrstellung in die eben beschriebene die Betätigungsvorrichtung freigegebene Stellung bewegt.

In Fig. 3 sind die beiden Rahmenteile 46 und 50 des Rahmens 12 im Schnitt erkennbar, wobei das Rahmenteil 50 die Dichtung 92 in einer Nut trägt. Die Dichtung 92 wurde als Tape eingebracht. Der Dichtung 92 ist eine am Türblatt 14 angebrachte Dichtlippe 108 zugeordnet, die auf das Türblatt 14 im Bereich der Dichtung 92 umlaufend auf das Türblatt 14 auf der Vorderseite 48 aufgeschweißt ist. Zudem ist der Griff 30 sowie die Lagerung der Türklinke 26 in dem Türblatt 14 erkennbar.

Der Seitenholm 22 ist durch Längs- und Querbleche versteift und kann erhebliche Kräfte aufnehmen, auch wenn es sich bei den Blechen um dünnes Titanblech handelt.

Unmittelbar neben der Dichtung 92 befindet sich eine ebenso umlaufende im Rahmen 12 fest angeordnete Brandschnur - Fire Blocker 92a -, die bei Hitze aufschäumt und verhindert, dass in der Schließstellung des Türblattes 14 im verriegelten Zustand das Türblatt 14 im Hinblick auf die Vorder- und Hinterseite 44 und 48 undicht wird.

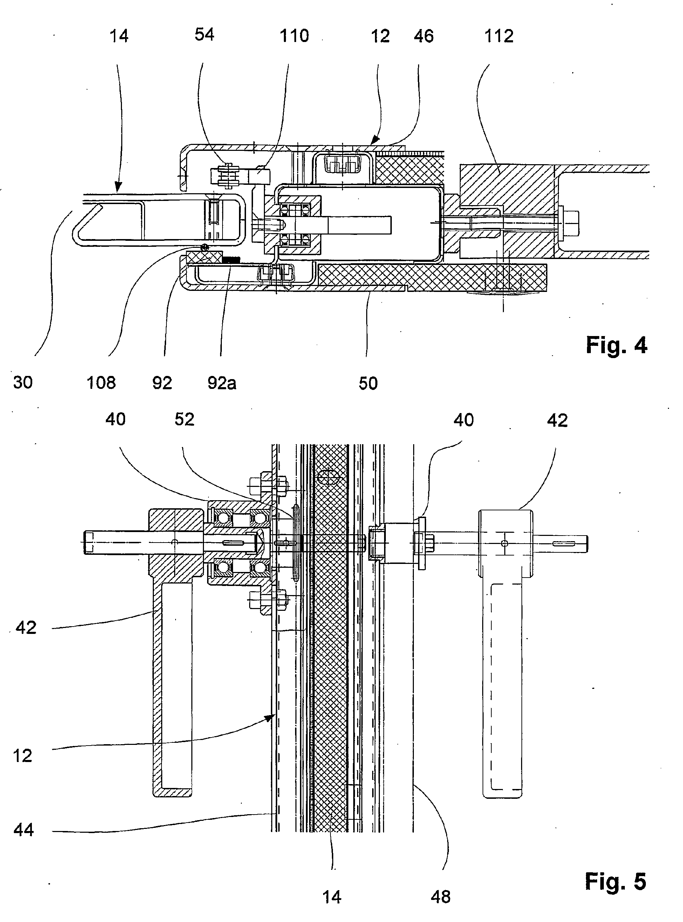

In Fig. 4 ist ein weiterer Querschnitt durch den Längsholm 22 und den Rahmen 12 in der Schließstellung des Türblattes 14 dargestellt. Erkennbar ist hierbei ein mit der Kette 54 gekoppelter Hebel 110, der mit einem hier nicht dargestellten elektrischen Signalgeber zusammenwirkt. Der Hebel 110 löst zusammen mit dem elektrischen Signalgeber ein Signal aus, wenn sich das Türblatt 14 in seiner Schließstellung befindet und das Türblatt 14 durch die Verriegelungsvorrichtung vollständig verriegelt ist. Hierdurch kann in einer von der Schiebetür 10 entfernt gelegene Überwachungseinheit, beispielsweise das Cockpit eines Flugzeuges, einfach erkannt werden, ob die Schiebetür 10 verreigelt ist. Fig. 4 zeigt des Weiteren, den Anschluss des Rahmens 12 und des seitlichen Versteifungsholms 22 mit einer weiteren Wandung 112.

In Fig. 6 ist in eine Querschnittsansicht in Höhe einer Versteifungsklaue 34 des Türblattes 12 dargestellt. Hierbei befindet sich das Türblatt 14 in seiner Schließstellung. Die Hinterkante 36 des Türblattes 14 ist über einen Bügel 114 mit der Versteifungsklaue 34 verbunden. Der Bügel 114 ist im Hinblick auf die Versteifungsklaue 34 bezogen auf die Richtung senkrecht zur Verschieberichtung und senkrecht zur Fläche des Türblattes 14 frei gelagert, in Verschieberichtung jedoch fest mit der Klaue 34 verbunden. Die Hinterkante 36 des Türblattes 14 ist mit dem Bügel 114 verschraubt.

Die Versteifungsklaue 34 des Türblattes 14 weist Eingriffsmittel mit schrägen Flächen 124 auf, die in Aufnahmittel des Rahmens 12 mit zugeordneten schrägen Flächen 122 eingreifen. Wie ausgeführt wurde, ist im Verriegelungszustand eine Kraft F₁' auf die Seiten 12a und 12b des Rahmens 12 wirksam. Diese Kraft F₁' drückt die Seiten 12a und 12b auseinander. Dadurch, dass die Versteifungsklaue 34 in die Aufnahmemittel in Form der schrägen Flächen eingreift, entsteht eine Reaktionskraft quer zur Verschieberichtung des Türblattes 14, welche die Seiten 12a und 12b des Rahmens 12 zusammenhält. Hierdurch ergibt sich somit ein Kraftschluss zwischen der Verriegelungsvorrichtung in Form der Rolle 80 mit dem Bewegungsumsetzer 58, dem Türblatt 14, den Seiten 12a und 12b des Rahmens 12, den schrägen Flächen 122 des Aufnahmemittels des Rahmens 12 und den schrägen Flächen 124 der Versteifungsklaue 34 des Türblattes 14. Hierdurch ist der Rahmen 12 im Bereich der Hinterkante 36 des Türblattes biegefest und somit steif ausgebildet.

Wie deutlich der Fig. 6 zu entnehmen ist, sind am hinteren Ende der Klaue 34 Rollen 118 vorgesehen, die an einer Innenseite 116 des Rahmens 12 sowie an der sich an dem Rahmen 12 anschließenden bis zum seitlichen Versteifungsholm 20 erstreckenden Wandung 120 anliegen. Hierdurch wird das Türblatt 14 beim Verschieben aus der Offenstellung in die Schließstellung und umgekehrt zusätzlich dann geführt, solange die Klauen 34 in die Aufnahmemittel des Rahmens 12 eingreifen. Hierdurch wir ein sicheres Führen im Endbereich der Verschiebebewegung vor der Schließstellung eine ein Verriegeln der schwimmend gelagerten Klaue 34 gewährleistet.

Die Rollen 118 im Zusammenwirken mit der Innenseite des Rahmens 12 auf der einen Seite - zweites Auflager - und die als schräge Flächen 124 ausgebildeten Eingriffsmittel des Türblattes 14 und die als schräge Flächen 122 ausgebildeten Aufnahmemittel des Rahmens 12 auf der anderen Seite - zweites Auflager - bilden zwei Auflager. Im wesentlichen über das erste Auflager werden die im Verriegelungszustand auftretenden weiteren Kräfte, beispielsweise aufgrund von Gasdrücken auf den Rahmen 12 und das Türblatt 14, aufgenommen. Durch die über die Kräfte F₁', F₁ und F₂ verspannten Seiten 12a und 12b des Rahmens 12 sind diese sehr widerstandfähig.

Die Klaue 34 mit den schrägen Flächen 124 greift in die zugeordneten schrägen Flächen 122 des Rahmens 12 ein. Die schrägen Flächen 122 des Rahmens 12 und die schrägen Flächen 124 der Klaue sind schräg zu einer Ebene parallel zur Verschieberichtung des Türblatts ausgebildet, sodass sich in der Schließstellung eine dauerhaft und eine möglichst große Anlagefläche ergibt. Durch diese Ausbildung im Zusammenwirken mit der durch die Verriegelungsvorrichtung im Verriegelungszustand erzeugten Kräfte F₁', F₁ und F₂ wird der Rahmen 12 im Bereich des Längsholms 62 in der Schließstellung ausgesteift. Der Rahmen 12 kann dadurch große Kräfte aufnehmen, ohne dass er sich verformt.

Das Spiel zwischen Bügel 114 und Klaue 34 ist mindestens so groß, wie der beim Verschließen durch das Andrücken entstehende leichte Versatz des Türblattes 14 für den Reibschluss in Verschieberichtung. Dieser leichte Versatz ergibt sich u.a. durch ein leichtes Nachgeben der Dichtung 92 und durch Überbrücken des zwischen der Dichtlippe 108 und der Dichtung 92 in der Freistellung existierenden Spaltes.

Die schräge Fläche 122 auf jeder Innenseite des Rahmens im Bereich der Hinterkante 76 des Türblattes 14 sowie die Klauen 34 sind im Hinblick auf die Ebene der Verschieberichtung des Türblattes symmetrisch ausgebildet.

Wie oben bereits ausgeführt, ist die Kraft F₁ auf das Türblatt 14 nur im Verriegelungszustand wirksam, in dem sich die Verriegelungsvorrichtung in Form des Bewegungsumsetzers 58 mit der Rolle 80 auf der einen Seite 12a des Rahmens 12 abstützt und das Türblatt 14 gegen die Dichtung 92 auf der anderen Seite 12b des Rahmens 12 drückt. Der Rahmen 12 ist somit auch nur im Verriegelungszustand ausgesteift.

In Fig. 9 ist eine Sperrvorrichtung 126 dargestellt, die ein Verfahren der Rollen 80 aus der Freistellung in die Haltestellung erst zulässt, wenn das Türblatt 14 seine Schließstellung vollständig erreicht hat. Die Sperrvorrichtung 126 ist mit einem Anschlagkolben 128 versehen, der in einem Zylinder 130 gegen die Kraft einer Feder 132 verschiebbar gelagert ist. Der Anschlagkolben 128 ist mit einem Sperrstift 134 verbunden, der im Zylinder 130 in einer Nut 136 mit dem Anschlagkolben 128 bewegbar ist.

Fig. 9 zeigt die Position, in der der Anschlagkolben 128 gegen die Kraft der Feder 132 in den Zylinder 130 eingerückt ist. In dieser eingerückten Position gibt der Sperrstift 134 das Sperrmittel 72 frei, das mit der Kette 54 gekoppelt ist.

Die Sperrvorrichtung 126 ist wichtig, um zu gewährleisten, dass die Schiebetür 10 nur in ihrer Schließstellung verriegelt wird. Nur in der Schließstellung wird ein dichtes Verriegeln des Türblattes 14 in dem Rahmen 12 gewährleisten.

Die Schiebetür 10 weist des Weiteren lösbare Haltemittel auf, die das Türblatt 14 in der Offenstellung halten. Ab einer bestimmten Kraft auf das Türblatt in Richtung Schließstellung ist das Türblatt in Richtung Schließstellung frei verschiebbar. Diese Haltemittel sind bekannt und daher im Einzelnen nicht näher dargestellt und beschrieben.

Die Schiebetür wird vorzugsweise als Sicherheitstür verwendet, die bestimmten Gasdrücken in der Schließstellung widersteht. Die Gasdrücke liegen dabei zwischen 150 Pa und 3500 Pa.

### Bezugszeichenliste

- 10: Schiebetür
- 12: Rahmen
- 12a: Seite des Rahmens
- 12b: Seite des Rahmens
- 14: Türblatt
- 16: obere Führung
- 18: untere Führung
- 20: seitlicher Versteifungsholm - links
- 22: seitlicher Versteifungsholm - rechts
- 24: Durchgangsöffnung
- 26: Türklinke
- 28: Vorderkante
- 30: Griff
- 32: Gummipuffer
- 34: Versteifungsklauen
- 36: Hinterkante
- 38: Sicherheitsfühler
- 40: Eingriff
- 42: Handhabe
- 44: Hinterseite
- 46: Rahmenteil - zweites
- 48: Vorderseite
- 50: Rahmenteil - erstes
- 52: Ritzel
- 54: Kette
- 56: Führungsflächen
- 58: Bewegungsumsetzer
- 60: oberer Querholm
- 62: Längsholm - links
- 64: Längsholm - rechts
- 66: unterer Querholm
- 68: Kettenspannmittel
- 70: Gleitführungen
- 72: Sperrmittel - Anschlagssicherung
- 74: Sperrmittel - Sicherheitsfühler
- 76: Schlitten
- 78: Ausnehmung
- 80: Rolle
- 82: Gehäuse
- 84: Achse
- 86: Nut
- 88: Führungskulisse
- 90: Totpunkt
- 92: Dichtung
- 92a: Fire Blocker
- 94: Aussparung
- 96: Stab
- 98: Kolben
- 100: Fühlerkopf
- 102: Feder
- 104: Zylinder
- 106: Sperrstift
- 108: Dichtlippe
- 110: Hebel
- 112: weitere Wandung
- 114: Bügel
- 116: Innenseite des Rahmens
- 118: Rollen
- 120: Wandung
- 122: Hinterschnitt
- 124: Erhöhungen
- 126: Sperrvorrichtung
- 128: Anschlagkolben
- 130: Zylinder
- 132: Feder
- 134: Sperrstift
- 136: Nut
- F1': Kraft, die an der Seite 12a, 12b des Rahmens wirksam ist
- F1: Kraft, die auf das Türblatt durch die Verriegelungsvorrichtung einwirkt
- F2: Querkraft, die zwischen den Flächen 122 und 124 wirksam ist

## Patentansprüche

1. Schiebetür (10) mit einem Türblatt (14), einem Rahmen (12), einer Führung (16, 18) für das Türblatt (14), welches zwischen einer Offenstellung und einer Schließstellung in der Führung (16, 18) verschiebbar ist, und Versteifungsmitteln zum zumindest bereichsweisen Aussteifen des Rahmens (12) in der Schließstellung, in welcher der Rahmen (12) den Randbereich der ersten und/oder zweiten Seite (44, 48) des Türblattes (14) zumindest bereichsweise bedeckt, wobei das Türblatt (14) Eingriffsmittel (34) und der Rahmen (12) Aufnahmemittel aufweist, die im wesentlichen nur in der Schließstellung ineinandergreifen, **dadurch gekennzeichnet dass** die Eingriffsmittel (34) und die Aufnahmemittel dabei eine Kraft (F₂) quer zur Verschieberichtung erzeugen, die den zugeordneten Bereich des Rahmens (12) aussteift.

2. Schiebetür nach Anspruch 1, **dadurch gekennzeichnet, dass** Eingriffsmittel (34) zumindest eine schräge Fläche (124) und die Aufnahmemittel eine zugeordnete schräge Fläche (122) aufweisen, wobei über die schrägen Flächen (122, 124) und eine Kraft (F₁'; F₁) auf das Türblatt (14) quer zur Verschieberichtung die Querkraft (F₂) als Reaktionskraft zur Aussteifung des Rahmens (12) erzeugt wird.

3. Schiebetür nach Anspruch 1 oder 2, **dadurch gekennzeichnet, dass** eine Verriegelungsvorrichtung (42, 52, 54, 56, 58) die Kraft (F₁'; F₁) auf das Türblatt (14) erzeugt.

4. Schiebetür nach Anspruch 3, **dadurch gekennzeichnet, dass** die Kraft (F₁'; F₁) auf das Türblatt (14) nur im Verriegelungszustand wirksam ist, in dem sich die Verriegelungsvorrichtung (42, 52, 54, 56, 58) auf der einen Seite (12a) des Rahmens (12) abstützt und das Türblatt (14) gegen Anschlagmittel (92) auf der anderen Seite (12b) des Rahmens (12) drückt.

5. Schiebetür nach Anspruch 4, **dadurch gekennzeichnet, dass** durch die Verriegelungsvorrichtung (42, 52, 54, 56, 58) im Verriegelungszustand die beiden Seiten (12a, 12b) des Rahmens (12) durch die Kraft (F₁', E₁) auseinander drückt, die Eingriffmittel (34) des Türblatts (14) und die Aufnahmemittel (122) des Rahmens (12) den Rahmen (12) zusammenhalten, wodurch die Querkraft (F₂) als Reaktionskraft auf die Verriegelung wirksam ist.

6. Schiebetür nach einem der vorangehenden Ansprüche, **dadurch gekennzeichnet, dass** die Eingriffsmittel (34) an der in Bezug auf die Verschieberichtung des Türblattes (14) von der Offenstellung in die Schließstellung an der Hinterkante (36) des Türblattes (14) angeordnet ist.

7. Schiebetür nach einem der vorangehenden Ansprüche, **dadurch gekennzeichnet, dass** Aufnahmemittel des Rahmens (12) jeweils auf beiden einander gegenüberliegenden Innenseiten des Rahmens (12) nebeneinander angeordnet sind.

8. Schiebetür nach Anspruch 7, **dadurch gekennzeichnet, dass** die den beiden Aufnahmemittel des Rahmens (12) zugeordneten Eingriffsmittel des Türblatts (14) als eine Klaue (34) ausgebildet sind.

9. Schiebetür nach Anspruch 8, **dadurch gekennzeichnet, dass** die Klaue (34) neben dem ersten, durch die schrägen Flächen (122, 124) gebildeten Auflager ein zweites Auflager aufweist, das zumindest durch eine an einer Innenseite des Rahmens (12) aufliegende Rolle (118) gebildet ist.

10. Schiebetür nach einem der Ansprüche 8 oder 9, **dadurch gekennzeichnet, dass** die Klaue (34) mit der Hinterkante (36) des Türblattes (14) über einen Bügel (114) verbunden ist, wobei der Bügel (114) relativ zur Klaue (34) in einer Richtung senkrecht zur Verschieberichtung des Türblattes (14) bewegbar gelagert ist.

11. Schiebetür nach Anspruch 10, **dadurch gekennzeichnet, dass** die Rolle (118) an der dem Türblatt (14) entfernt gelegenen Seite der Klaue (34) in dieser gelagert ist.

12. Schiebetür nach einem der Ansprüche 7 bis 11, **dadurch gekennzeichnet, dass** die Aufnahmemittel des Rahmens (12) und die Eingriffsmittel (34) des Türblattes (14) im Hinblick auf die Ebene der Verschieberichtung des Türblattes (14) symmetrisch ausgebildet sind.

13. Schiebetür nach einem der vorangehenden Ansprüche, **dadurch gekennzeichnet, dass** der Rahmen (12) ein erstes und ein zweites Längsrahmenteil umfasst, wobei bei der Verschiebebewegung des Türblattes (14) aus der Offenstellung in die Schließstellung und umgekehrt das Türblatt (14) durch das erste Längsrahmenteil hindurch geschoben wird und die Vorderkante (28) des Türblattes (14) in der Schließstellung des Türblattes (14) an dem zweiten Längsrahmenteil angeordnet ist.

14. Schiebetür nach Anspruch 13, **dadurch gekennzeichnet, dass** die Aufnahmemittel (122) des Rahmens (12) in dem ersten Längsrahmenteil und die Eingriffsmittel (34) des Türblattes (14) nur an der Hinterkante (36) des Türblattes (14) angeordnet sind, sodass nur an dem ersten Längsrahmenteil eine Versteifung in der Schließstellung wirksam ist.

15. Schiebetür nach einem der vorangehenden Ansprüche, **dadurch gekennzeichnet, dass** der Rahmen (12) in Leichtbauweise, beispielsweise aus Blech, hergestellt ist.

## Claims

1. A sliding door (10) comprising a door leaf (14), a frame (12), guide means (16, 18) for the door leaf (14), which door leaf (14) can be slid within said guide means (16, 18) between an open position and a closed position, and stiffening means for stiffening at least portions of said door frame (12) in the closed position in which the frame (12) covers at least portions of the edge area of the first and/or the second side (44, 48) of said door leaf (14), wherein the door leaf (14) has engaging means (34) and the frame (12) has receiving means which will essentially only engage with each other in the closed position, **characterized in that** in the process, said engaging means (34) and said receiving means will generate a force (F₂) transverse to the sliding direction which will act to stiffen the relevant portion of the frame (12).

2. The sliding door of claim 1 **characterized in that** said engaging means (34) have at least one slanted surface (124) and said receiving means have at least one corresponding slanted surface (122), with said slanted surfaces (122, 124) and a force (F₁'; F₁) acting on the door leaf (14) perpendicular to the sliding direction creating the transverse force (F₂) as a reaction force for stiffening said frame (12).

3. The sliding door of claims 1 or 2 **characterized in that** locking means (42, 52, 54, 56, 58) will generate the force (F₁'; F₁) acting on the door leaf (14).

4. The sliding door of claim 3 **characterized in that** said force (F₁'; F₁) acting on said door leaf (14) will only be active in the locked state in which said locking means (42, 52, 54, 56, 58) abut the one side (12a) of the frame (12) with the door leaf (14) pressing against stop means (92) on the other side (12b) of said frame (12).

5. The sliding door of claim 4 **characterized in that** in the locked state, said locking means (42, 52, 54, 56, 58) will act to push apart the two sides (12a, 12b) of said frame (12) by means of the force (F₁'; F₁), with said engaging means (34) of the door leaf (14) and said receiving means (122) of the frame (12) holding the frame (12) together, which results in the transverse force (F₂) acting as a reaction force on said locking.

6. The sliding door of one of the preceding claims **characterized in that** said engaging means (34) are disposed on the rear edge (36) of said door leaf (14) relating to the sliding direction of the door leaf (14) from its open position to its closed position.

7. The sliding door of one of the preceding claims **characterized in that** engaging means of said frame (12) are each provided next to one another on both opposing inner sides of said frame (12).

8. The sliding door of claim 7 **characterized in that** the engaging means of the door leaf (14) allocated to the two receiving means of the frame (12) are in the form of a claw (34).

9. The sliding door of claim 8 **characterized in that** besides the first abutment constituted by the slanted surfaces (122,124), said claw (34) comprises a second abutment which is formed by at least one roller (118) resting on an inner side of said frame (12).

10. The sliding door of one of claims 8 or 9 **characterized in that** said claw (34) is connected to the rear edge (36) of said door leaf (14) via a bracket (114) which latter is movably mounted with respect to said claw (34) in a direction perpendicular to the sliding direction of said door leaf (14).

11. The sliding door of claim 10 **characterized in that** said roller (118) is mounted within said claw (34) on a distal side thereof with respect to the door leaf (14).

12. The sliding door of one of claims 7 to 11 **characterized in that** said receiving means of said frame (12) and said engaging means (34) of said door leaf (14) are symmetrical with respect to the plane of the sliding direction of said door leaf (14).

13. The sliding door of one of the preceding claims **characterized in that** said frame (12) comprises first and second longitudinal frame elements, whereby, when the door leaf (14) is being slid from its open position to its closed position and vice versa, the door leaf (14) will be pushed through said first longitudinal frame element, and, in a closed position of said door leaf (14), the front edge (28) of said door leaf (14) will come to rest on the second longitudinal frame element.

14. The sliding door of claim 13 **characterized in that** said receiving means (122) of said frame (12) are provided in said first longitudinal frame element and said engaging means (34) of said door leaf (14) are only provided on the rear edge (36) of said door leaf (14) so that only the first longitudinal frame element will be effectively stiffened in the closed position.

15. The sliding door of one of the preceding claims **characterized in that** said frame (12) is of a lightweight design, preferably made of sheet metal.

## Revendications

1. Porte coulissante avec un battant de porte (14), un cadre (12), une glissière (16, 18) pour le battant de porte (14) qui peut être déplacée entre une position ouverte et une position fermée dans la glissière (16, 18), et un moyen de renforcement pour la consolidation du cadre (12) au moins par endroits dans la position fermée, dans laquelle le cadre (12) couvre au moins par endroits la zone du bord du premier et/ou deuxième côté (44, 48) du battant de porte (14), sachant que le battant de porte (14) présente un moyen de prise (34) et le cadre un moyen de réception qui s'engrènent essentiellement uniquement dans la position fermée, **caractérisée en ce que** le moyen de prise (34) et le moyen de réception produisent une force (F2) transversalement par rapport au sens de déplacement, qui consolide la zone correspondante du cadre (12).

2. Porte coulissante selon revendication 1, **caractérisée en ce que** le moyen de prise (34) présente au moins une surface oblique (124) et le moyen de réception au moins une surface oblique correspondante (122), sachant que la force transversale (F2) en tant que force de réaction pour la consolidation du cadre (12) est produite par les surfaces obliques (122, 124) et par une force (F1', F1) sur le battant de porte (14) transversalement par rapport au sens de déplacement.

3. Porte coulissante selon revendication 1 ou 2, **caractérisée en ce qu'**un dispositif de verrouillage (42, 52, 54, 56, 58) produit la force (F1'; F1) sur le battant de porte (14).

4. Porte coulissante selon revendication 3, **caractérisée en ce que** la force (F1' ;F1) agit sur le battant de porte (14) uniquement dans l'état de verrouillage dans lequel le dispositif de verrouillage (42, 52, 54, 56, 58) s'appuie sur un côté (12a) du cadre (12) et le battant de porte (14) pèse contre un moyen de butée (92) sur l'autre côté (12b) du cadre (12).

5. Porte coulissante selon revendication 4, **caractérisée en ce que** le dispositif de verrouillage (42, 52, 54, 56, 58) dans l'état de verrouillage écarte les deux côtés (12a, 12b) du cadre (12) par la force (F1', F1), le moyen de prise (34) du battant de porte (14) et le moyen de réception (122) du cadre maintiennent le cadre (12), ce par quoi la force transversale (F2) agit en tant que force de réaction sur le verrouillage.

6. Porte coulissante selon l'une des revendications précédente, **caractérisée en ce que** le moyen de prise (34) est placé sur le bord arrière (36) du battant de porte (14) en référence au sens de déplacement du battant de porte (14) de la position d'ouverture dans la position de fermeture.

7. Porte coulissante selon l'une des revendications précédentes, **caractérisée en ce que** des moyens de réception du cadre (12) sont placés les uns à côté des autres respectivement sur les deux côtés intérieurs du cadre (12) situés face à face.

8. Porte coulissante selon revendication 7, **caractérisé en ce que** les moyens de prise du battant de porte (14) correspondant aux deux moyens de réception du cadre (12) sont formés en tant que mâchoire (34).

9. Porte coulissante selon revendication 8, **caractérisée en ce que** la mâchoire (34) présente, près du premier appui formé par les surfaces obliques (122, 124), un deuxième appui, qui est formé au moins par une roulette (118) s'appuyant sur un côté intérieur du cadre (12).

10. Porte coulissante selon l'une des revendications 8 ou 9, **caractérisée en ce que** la mâchoire (34) est reliée au bord arrière (36) du battant de porte (14) par une attache (114), sachant que l'attache (114) est logée de manière amovible par rapport à la mâchoire (34) dans un sens, verticalement par rapport au sens de déplacement du battant de porte (14).

11. Porte coulissante selon revendication 10, **caractérisée en ce que** la roulette (118) sur le côté de mâchoire (34) situé à distance du battant de porte (14) est logé dans celui-ci.

12. Porte coulissante selon l'une des revendications 7 à 11, **caractérisée en ce que** le moyen de réception du cadre (12) et le moyen de prise du battant de porte (14) sont formés symétriquement par rapport au niveau du sens de déplacement du battant de porte (14).

13. Porte coulissante selon l'une des revendications précédentes, **caractérisée en ce que** le cadre (12) comprend une première et une deuxième partie de cadre longitudinal, sachant que lors du mouvement de déplacement du battant de porte (14) depuis la position d'ouverture et dans la position de fermeture et inversement, le battant de porte (14) est poussé à travers la première partie de cadre longitudinal et le bord avant (28) du battant de porte (14) est placé dans la position de fermeture du battant de porte (14) sur la deuxième partie de cadre longitudinal.

14. Porte coulissante selon revendication 13, **caractérisée en ce que** le moyen de réception (122) du cadre (12) est placé dans la première partie de cadre longitudinal et le moyen de prise (34) du battant de porte (14) est placé uniquement sur le bord arrière (36) du battant de porte, de manière à ce qu'une consolidation n'agisse que sur la première partie de cadre longitudinal dans la position de fermeture.

15. Porte coulissante selon l'une des revendications précédentes, **caractérisée en ce que** le cadre (12) est fabriqué en construction légère, par exemple en tôle.
